Europäisches Patentamt

European Patent Office

Office européen des brevets

(19)

(11) Veröffentlichungsnummer: **0 388 922**
**A2**

(12) # EUROPÄISCHE PATENTANMELDUNG

(21) Anmeldenummer: 90105346.2

(22) Anmeldetag: 21.03.90

(51) Int. Cl.⁵· **F16K 17/04, F16K 47/00**

(30) Priorität: 21.03.89 DE 3909232

(43) Veröffentlichungstag der Anmeldung:
26.09.90 Patentblatt 90/39

(84) Benannte Vertragsstaaten:
**DE ES FR GB IT NL**

(71) Anmelder: **Klöckner-Humboldt-Deutz
Aktiengesellschaft
Deutz-Mülheimer-Strasse 111 Postfach 80 05
09
D-5000 Köln 80(DE)**

(72) Erfinder: **Mehlem, Herbert
Leimbachweg 17
D-5000 Köln 80(DE)**

(54) **Absteuerventil mit Dämpfungseinrichtung.**

(57)
1. Bei bekannten Absteuerventilen beispielsweise bei Schmierölkreisläufen von Brennkraftmaschinen tritt häufig der Mangel auf, daß die Absteuerventile "flattern" und somit für eine erhebliche Geräuschabstrahlung verantwortlich sind.

2. Dieser Nachteil wird erfindungsgemäß dadurch vermieden, daß die Bewegungen des Absteuerventils durch eine Dämpfungseinrichtung gedämpft werden. Dabei wirkt ein Dämpfungsraum (17) über einen Dämpfungsspalt mit dem Druckraum (8) der abzusteuernden Flüssigkeit derart zusammen, daß bei einer Absteuerbewegung des Absteuerventils der Dämpfungsraum (17) mit Dämpfungsflüssigkeit gefüllt und bei einer Schließbewegung entleert wird.

FIG. 1

## Absteuerventil mit Dämpfungseinrichtung

Die Erfindung betrifft ein Absteuerventil gemäß Oberbegriff des Patentanspruchs 1.

Aus der DE-OS 18 00 524 ist ein gattungsgemäßes Absteuerventil für Flüssigkeiten bekannt. Dabei ist ein Stufenkolben in einem Zylinder gegen die Kraft einer Feder verschiebbar angeordnet. Ein Dämpfungsraum, der die Bewegungen des Stufenkolbens in dem Zylinder abdämpft, ist über einen Dämpfungsspalt mit dem Druckraum des abzusteuernden Fluids verbunden. Dabei wird bei einem Absteuervorgang der Dämpfungsraum durch eine entsprechende Bewegung des Stufenkolbens verkleinert und die in dem Dämpfungsraum befindliche Dämpfungsflüssigkeit muß durch den Dämpfungsspalt in den Druckraum des Fluids verdrängt werden. Somit stellt sich in diesem Druckraum ein höherer Druck ein, der einem Nachströmen von Dämpfungsflüssigkeit durch den Dämpfungsspalt entgegensteht und somit die Absteuerbewegung des Stufenkolbens stark dämpft. Bei einer Schließbewegung zur Beendigung des Absteuervorgangs wird das Volumen des Dämpfungsraums wieder vergrößert und es strömt folglich wieder Dämpfungsflüssigkeit in diesen Raum. Dadurch verringert sich aber der Druck in dem Druckraum und die Schließgeschwindigkeit des Stufenkolbens wird bis zum Aufschlagen des Stufenkolbens auf den Schließsitz größer. Dies verursacht trotz einer gewissen Dämpfung der Bewegungen des Stufenkolbens starke Geräusche.

Der Erfindung liegt die Aufgabe zugrunde, ein Absteuerventil mit Dämpfungseinrichtung bereitzustellen, das die Öffnungsbewegung schnell ausführt und die Schließbewegung stark dämpft.

Diese Aufgabe wird erfindungsgemäß durch die kennzeichnenden Merkmale des Patentanspruchs 1 gelöst. Dadurch, daß der Ringvorsprung an den Druckraum des abzusteuernden Fluids angrenzt und der abgetragene Teil des Stufenkolbens durch den Ringvorsprung in den Druckraum hineinragt, wird der Dämpfungsraum bei einer Absteuerbewegung des Stufenkolbens vergrößert und bei einer Schließbewegung des Stufenkolbens verkleinert. Zunächst einmal ergibt sich durch diese Ausbildung der Vorteil, daß der Stufenkolben bei einer Absteuerbewegung mit der Schulter des Stufenkolbens gegen keinen Anschlag anschlagen und somit Geräusche verursachen kann, da er nur durch die sich zusammenschiebende Feder in seiner Hubbewegung begrenzt wird. Weiterhin muß der Stufenkolben bei der Absteuerbewegung keine Dämpfungsflüssigkeit gegen einen außerhalb des Druckraums anstehenden Flüssigkeitsdruck herausdrücken, sondern es wird in den Dämpfungsraum schon unter Druck stehende Dämpfungsflüssigkeit angesaugt und somit nur eine schwache Dämpfung erreicht. Dagegen wird bei einer Schließbewegung des Stufenkolbens der Dämpfungsraum durch die entsprechende Bewegung des Stufenkolbens verkleinert und somit muß die Dämpfungsflüssigkeit gegen den außen anstehenden Flüssigkeitsdruck aus dem Dämpfungsraum herausgepreßt werden, wodurch sich eine stärkere Dämpfung einstellt.

Vorteilhafte Weiterbildungen des erfindungsgemäßen Absteuerventils sind in den abhängigen Ansprüchen dargestellt.

Im folgenden wird die Erfindung anhand in der Zeichnung dargestellter Ausführungsbeispiele näher beschrieben.

Es zeigen:

Fig. 1: ein Absteuerventil im geschlossenen Zustand,

Fig. 2: ein Ventil im geöffneten Zustand,

Fig. 3: ein in einem Pumpengehäuse angeordnetes Absteuerventil mit äußerer Absteuerung,

Fig. 4: eine Variante des Pumpengehäuses mit innerer Absteuerung und

Fig. 5: ein für die Verwendung gemäß Fig. 4 modifiziertes Absteuerventil.

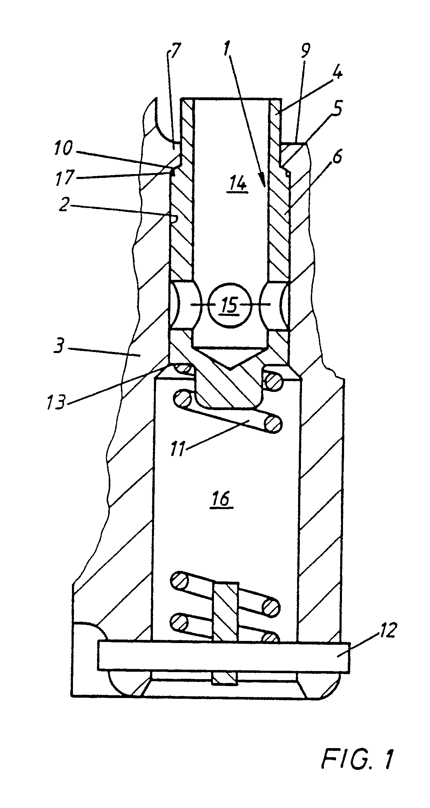

Das Absteuerventil gemäß Fig. 1 weist einen Stufenkolben 1 auf, der in einem Zylinder 2, der in ein Gehäuse 3 eingearbeitet ist, bewegbar geführt ist. Der Stufenkolben 1 weist einen abgetragenen Teil 4 und daran anschließend über eine Schulter 5 einen Teil 6 auf, der mit der Innenoberfläche des Zylinders 2 zusammenwirkt. Der Zylinder 2 weist seinerseits einen Ringvorsprung 7 auf, der die einem Druckraum 8 zugewandte Stirnseite 9 des Zylinders 2 bildet. Der abgetragene Teil 4 des Stufenkolbens 1 ist in den Ringvorsprung 7 eingeführt und ragt mit seiner abgetragenen Stirnseite in den Druckraum 8 hinein. Dabei stützt sich die Schulter 5 des Stufenkolbens 1 an der Übergangsfläche 10 des Zylinders 2 zu dem Ringvorsprung 7 ab. Gehalten wird der Stufenkolben in dieser Position von einer Feder 11, die sich an einem Spannstift 12 und der dem Druckraum 8 gegenüberliegenden Stirnseite 13 des Stufenkolbens 1 abstützt. In den Stufenkolben 1 ist weiterhin eine Sacklochbohrung 14 eingearbeitet, die mit Querbohrungen 15, die in die Kolbenwand eingearbeitet sind, in Verbindung steht. Im geschlossenen Zustand des Absteuerventils sind die Querbohrungen 15 von der Zylinderwand 2 verschlossen, so daß keine Flüssigkeit von dem Druckraum 8 in einen Absteuerraum 16 gelangen kann. Die Schulter 5 des Stufenkolbens 1 weist eine Einkerbung auf, die - aus fertigungstechnischen Gründen in den Stufenkolben eingearbeitet - die Basis des Dämpfungsraums 17 bildet. Der abgetragene Teil 4 des Stufenkolbens 1 ist mit Spiel in dem Ringvorsprung 7 eingeschoben, so daß der verbleibende Zwischenraum als Dämpfungsspalt wirkt. Dadurch brauchen keine zusätzlichen Bohrungen mit eingesetzten Drosseln gefertigt werden, über die ansonsten die Dämpfungsflüssigkeit dem Dämpfungsraum zugeführt werden müßte. Der nicht abgetragene Teil 6 des Stufenkolbens 1 ist dagegen dichtend in dem Zylinder 2 geführt. Damit ist eine Verbindung des Dämpfungsraums 17 nur über den zuvor definierten Dämpfungsspalt mit dem Druckraum 8 hergestellt. Dadurch läßt sich der Dämpfungsgrad leicht durch die entsprechende Variierung der Paarung Stufenkolben 1 und Zylinder 2 speziell in den Teilen abgetragener Teil 4 und Ringvorsprung 7 ändern. Bei Bedarf können im abgetragenen Teil 4 unterschiedlich bearbeitete Stufenkolben 1 bereitgestellt werden.

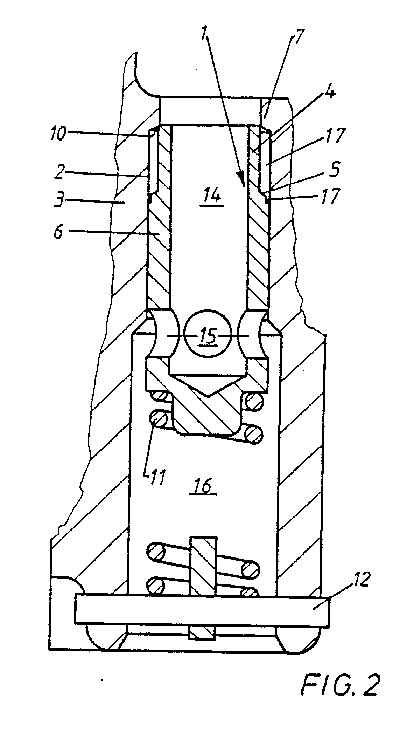

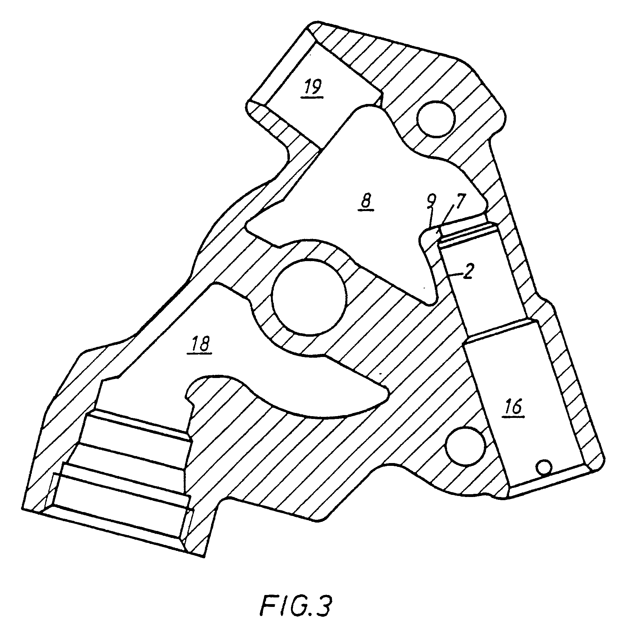

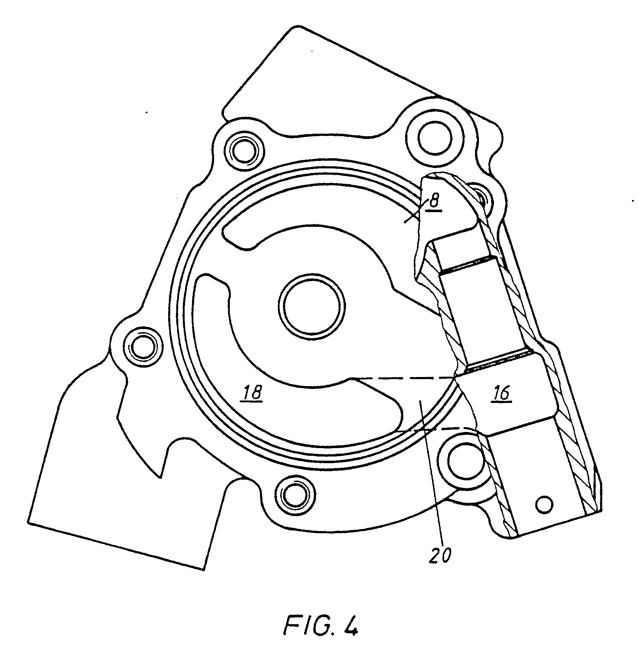

Von den in den Pumpengehäusen gemäß Fig. 3 und Fig. 4 eingebauten nicht dargestellten Pumpen wird das Schmieröl in einem Saugraum 18 angesaugt und in den Druckraum 8 gefördert. Von dort wird es über einen Leitungsanschluß 19 in den weiteren Schmierölkreislauf der Brennkraftmaschine geleitet. Steigt der Druck des Schmieröls in dem Druckraum 8 auf einen zu hohen Wert an, wird das Schmieröl über das Absteuerventil (Fig. 2) in der zuvor beschriebenen Art über den Absteuerraum 16 beispielsweise in die Ölwanne der Brennkraftmaschine abgesteuert.

Fig. 4 zeigt einen Einsatz des erfindungsgemäßen Absteuerventils ebenfalls in einem Schmierölkreislauf einer Brennkraftmaschine allerdings mit innerer Absteuerung. Hierbei ist der Absteuerraum 16 des Absteuerventils über einen Rückströmkanal 20 mit dem Saugraum 18 der Förderpumpe verbunden.

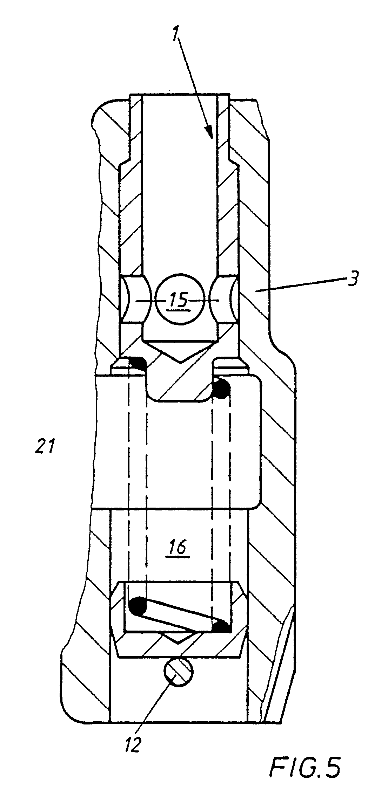

Fig. 5 zeigt das entsprechend modifizierte Absteuerventil, bei dem in das Gehäuse 3 einen Öffnung 21 eingearbeitet ist, die mit dem Absteuerraum 16 kommuniziert.

**Ansprüche**

1. Absteuerventil mit einem in einem Zylinder (2) gegen die Kraft einer Feder (11) verschiebbaren Stufenkolben (1), wobei der abgetragene Teil (4) des Stufenkolbens (1) mit einem Ringvorsprung des Zylinders (2) einen Dämpfungsraum (17) bildet, der über einen Dämpfungsspalt mit dem Druckraum (8) der abzusteuernden Flüssigkeit verbunden ist,
dadurch gekennzeichnet, daß der Ringvorsprung (7) an den Druckraum (8) angrenzt, und daß der abgetragene Teil (4) des Stufenkolbens (1) in den Druckraum (8) hineinragt.

2. Absteuerventil nach Anspruch 1,
dadurch gekennzeichnet, daß der abgetragene Teil (4) des Stufenkolbens (1) mit einer Spielpassung in dem Ringvorsprung (7) geführt ist.

3. Absteuerventil nach einem der Ansprüche 1 oder 2,
dadurch gekennzeichnet, daß der an den abgetragenen Teil (4) anschließende Teil (6) des Stufenkolbens (1) dichtend in dem Zylinder (2) geführt ist.

FIG. 1

FIG. 2

FIG.3

FIG. 4

FIG.5